Europäisches Patentamt

European Patent Office

Office européen des brevets

(19)

(11) Numéro de publication : **0 448 472 A1**

## (12) DEMANDE DE BREVET EUROPEEN

(21) Numéro de dépôt : **91400765.3**

(22) Date de dépôt : **21.03.91**

(51) Int. Cl.⁵ : **B01D 11/02**

(30) Priorité : **23.03.90 FR 9003775**

(43) Date de publication de la demande :
**25.09.91 Bulletin 91/39**

(84) Etats contractants désignés :
**AT BE CH DE ES GB IT LI**

(71) Demandeur : **Martel, Jean-Pierre**
**247-2 Allée Traversière**
**F-06250 Mougins (FR)**

(72) Inventeur : **Martel, Jean-Pierre**
**247-2 Allée Traversière**
**F-06250 Mougins (FR)**

(74) Mandataire : **Portal, Gérard et al**
**Cabinet Beau de Loménie 55, rue**
**d'Amsterdam**
**F-75008 Paris (FR)**

(54) **Appareil de traitement continu de matières végétales comportant des moyens d'inclinaison d'au moins certains des dispositifs de traitement.**

(57) L'invention concerne un appareil de traitement de matières premières végétales.
Cet appareil comprend plusieurs dispositifs de traitement (12u, 12m, 12l) et est caractérisé en ce qu'il comprend des moyens d'inclinaison (20) d'au moins certains des dispositifs de traitement.
Grâce aux moyens d'inclinaison (20), l'appareil peut fonctionner en extracteur ou en distillateur ou simultanément en extracteur-distillateur.

*fig_1*

# APPAREIL DE TRAITEMENT CONTINU DE MATIERES VEGETALES COMPORTANT DES MOYENS D'INCLINAISON D'AU MOINS CERTAINS DES DISPOSITIFS DE TRAITEMENT

L'invention concerne essentiellement un appareil de traitement continu de matières végétales comportant des moyens d'inclinaison d'au moins certains des dispositifs de traitement.

On connaît par le document FR-A-1 457 480 Berti un appareil à cylindres sensiblement horizontaux pour la distillation continue de marc de raisin. Les appareils à cylindres horizontaux sont pourvus de segments très courts de vis transporteuses ayant les mêmes directions d'inclinaison et alternés avec des éléments formés par des bras ou palettes sensiblement non inclinés par rapport à l'axe des cylindres et fonctionnant comme des palettes mélangeuses. Les cylindres sont disposés de manière fixe.

La matière première est alimentée à l'entrée et à la sortie par des vis hélicoïdales de manière à favoriser l'agglomération du marc en formant des tampons secs ou bouchons de marc pressé, afin d'éviter la sortie de l'appareil de vapeur alcoolique.

La présente invention a pour but de résoudre le nouveau problème technique consistant en la fourniture d'un appareil de traitement de matière végétales, notamment aromatiques, médicinales, alimentaires ou résiduaires, capable de fonctionner aussi bien en extracteur qu'en distillateur, afin de permettre le traitement de nombreuses matières premières végétales, afin d'en extraire à volonté leurs principes actifs.

La présente invention a encore pour but de résoudre le nouveau problème technique consistant en la fourniture d'un appareil de traitement de matières premières végétales capable de réaliser ces traitements dans de larges gammes de caractéristiques physiques et de taux d'humidité, en fonction de l'espèce végétale ainsi que de l'état de fraîcheur de la matière première à traiter.

La présente invention a encore pour but de résoudre le nouveau problème technique consistant en la fourniture d'une solution permettant de réaliser la récupération de principes volatils tels que les arômes à partir de matières végétales correspondantes.

La présente invention a encore pour but de résoudre le nouveau problème technique consistant en la fourniture d'une solution permettant le traitement de produits solides par un gaz ou une vapeur surchauffée que ce soit dans un but de décontamination bactérienne, de désinsectisation, de stérilisation, ou tout autre réaction thermique ou chimique, grâce à une polyvalence de l'installation. De préférence, ce traitement est réalisé en continu.

Ainsi, la présente invention fournit un appareil de traitement de matières premières avantageusement végétales, notamment aromatiques, médicinales, alimentaires ou résiduaires, comprenant plusieurs dispositifs de traitement reliés les uns aux autres par des moyens de liaison permettant le transfert de la matière première végétale et disposés à des hauteurs différentes, en définissant ainsi respectivement un dispositif de traitement de niveau supérieur recevant la matière première végétale à traiter et un dispositif de traitement de niveau inférieur évacuant cette matière première végétale après traitement, des moyens de traitement étant prévus dans lesdits dispositifs, comprenant des moyens de transport de la matière première végétale à l'intérieur desdits dispositifs de traitement, et des moyens de circulation de fluide, pour faire circuler un fluide de traitement dans lesdits dispositifs, avantageusement à contre-courant, caractérisé en ce qu'il comprend des moyens d'inclinaison d'au moins certains des dispositifs de traitement. De préférence, ces moyens d'inclinaison comprennent des axes supports des dispositifs de traitement, permettant un pivotement des dispositifs de traitement dans un plan vertical, en permettant ainsi de modifier l'inclinaison de ce dispositif de traitement. Avantageusement, ces moyens d'inclinaison permettent de réaliser une inclinaison variable prédéterminée.

Selon une caractéristique avantageuse de l'appareil selon l'invention, les moyens d'inclinaison précités permettent de réaliser une inclinaison inverse de la matière première relativement au sens de circulation de la matière première, afin de ralentir la vitesse de circulation de la matière première végétale dans les dispositifs de traitement.

Selon une autre caractéristique avantageuse de l'appareil selon l'invention, l'inclinaison des dispositifs de traitement est comprise entre quelques degrés et environ 45°, de préférence entre environ 5° et 45° environ.

Selon une variante de réalisation particulière, les moyens de transport de la matière première à l'intérieur du dispositif de traitement comprennent des éléments de propulsion alternés avec des éléments d'arrêt ou de blocage de l'avance de la matière première. Ces moyens de transport peuvent être de préférence à vis dont la continuité est rompue par des palettes radiales formant des tampons temporaires de matière première.

Selon une autre caractéristique avantageuse de l'invention, l'appareil selon l'invention est équipé d'un système d'alimentation étanche de matières premières végétales à l'entrée du premier dispositif de traitement, en particulier en prévoyant le convoyeur d'alimentation en matières premières végétales à l'entrée d'une trémie d'alimentation du dispositif de traitement de niveau supérieur, en construction fermée, et avantageusement également à la sortie du dispositif de traitement inférieur.

Selon une autre caractéristique de la présente invention, les moyens de liaison précités des dispositifs de traitement entre eux sont de longueurs variables pour permettre des distances variables entre les dispositifs de traitement adjacents.

Selon un mode de réalisation particulièrement avantageux de ta présente invention, les dispositifs de traitement précités sont disposés en implantation en ligne.

Selon un autre mode de réalisation particulier de l'appareil selon l'invention, les dispositifs de traitement précités sont disposés en implantation en équerre.

Selon un autre mode de réalisation de l'appareil de traitement selon l'invention, les dispositifs de traitement précités sont disposés en zigzag, c'est-à-dire de manière non parallèle et de façon que l'entrée d'un dispositif de traitement de niveau intermédiaire soit disposée en-dessous de la sortie du dispositif de traitement supérieur adjacent, tandis que sa sortie est disposée du côté de l'entrée du dispositif de traitement supérieur adjacent.

Selon une autre caractéristique particulièrement avantageuse, chaque dispositif de traitement est équipé d'un faux fond comportant une grille.

Selon une caractéristique particulière de l'appareil de traitement selon l'invention, le fluide de traitement précité comprend de la vapeur, en particulier de la vapeur d'eau, dans le cadre de la fonction de distillation de l'appareil.

Selon une autre caractéristique particulière de l'appareil de traitement selon l'invention, le fluide de traitement précité comprend un solvant aqueux, organique, hydro-organique en particulier hydro-alcoolique, dans le cadre d'une fonction extraction de l'appareil.

L'appareil de traitement selon l'invention permet également de réaliser un procédé de traitement correspondant, comme cela est bien compréhensible à l'homme de l'art.

Grâce à la conception de l'appareil de traitement selon l'invention, celui-ci peut fonctionner soit en extracteur, soit en distillateur, soit simultanément en extracteur-distillateur. Cet appareil permet d'effectuer des extractions par solvant continu à contre-courant pour obtenir des principes actifs fixés d'une matière première végétale, par exemple aromatique, médicinale, alimentaire ou résiduaire. Le terme solvant couvre ici tous liquides aqueux, alcooliques, solvants volatils, ou leurs mélanges en toute proportion.

Cette installation permet aussi de traiter un produit solide par un gaz ou une vapeur surchauffé, que ce soit dans un but de décontamination bactérienne, de désinsectisation, de stérilisation, ou de toutes autres réactions thermiques ou chimiques.

On comprend ainsi que l'appareil de traitement selon l'invention est polyvalent, qu'il peut être amorti rapidement et est donc d'une grande rentabilité dans les industries aromatiques, pharmaceutiques et alimentaires en général qui pratiquent dans de nombreux cas les deux grands procédés unitaires que sont la distillation et l'extraction.

Grâce aux variantes de réalisation selon l'invention combinant plusieurs dispositifs de traitement en série, il est possible de réaliser une adaptation aux quantités à traiter.

D'autres buts, caractéristiques et avantages de l'invention apparaîtront clairement à la lumière de la description explicatif qui va suivre faite en référence aux dessins annexés représentant plusieurs modes de réalisation de l'appareil de traitement selon l'invention, donnés simplement à titre d'illustration et qui ne sauraient donc en aucune façon limiter la portée de l'invention. Dans les dessins :

– la figure 1 représente un premier mode de réalisation actuellement préféré dans l'appareil de traitement selon l'invention comprenant plusieurs dispositifs de traitement reliés entre eux en série, en fonction distillation de l'appareil ;

– la figure 2 représente le même mode de réalisation actuellement préféré de l'appareil de traitement selon l'invention représenté à la figure 1, mais en fonction extraction, où l'on peut observer que les dispositifs de traitement sont inclinés grâce aux moyens d'inclinaison ;

– la figure 3 représente une première variante de réalisation d'un dispositif d'alimentation du dispositif de traitement de niveau supérieur par vis légèrement coniques avec effet de compression ;

– la figure 4 représente une variante de réalisation d'un dispositif d'alimentation du dispositif de traitement de niveau supérieur par un ensemble piston et cylindre à mouvement alternatif ou tiroir ;

– la figure 5 représente encore une variante de réalisation d'un dispositif d'alimentation par sas à commande mécanique, pneumatique ou autre ;

– la figure 6 représente un appareil de traitement selon l'invention disposé selon une implantation en ligne ;

– la figure 7 représente un autre mode de réalisation de l'appareil selon l'invention dont les dispositifs de traitement sont disposés en implantation en équerre (vue de dessus) ; et

– les figures 8A et 8B représentent respectivement un appareil selon l'invention dont les dispositifs de traitement sont disposés décalés et non parallèles, de manière à aboutir à un gain de place important.

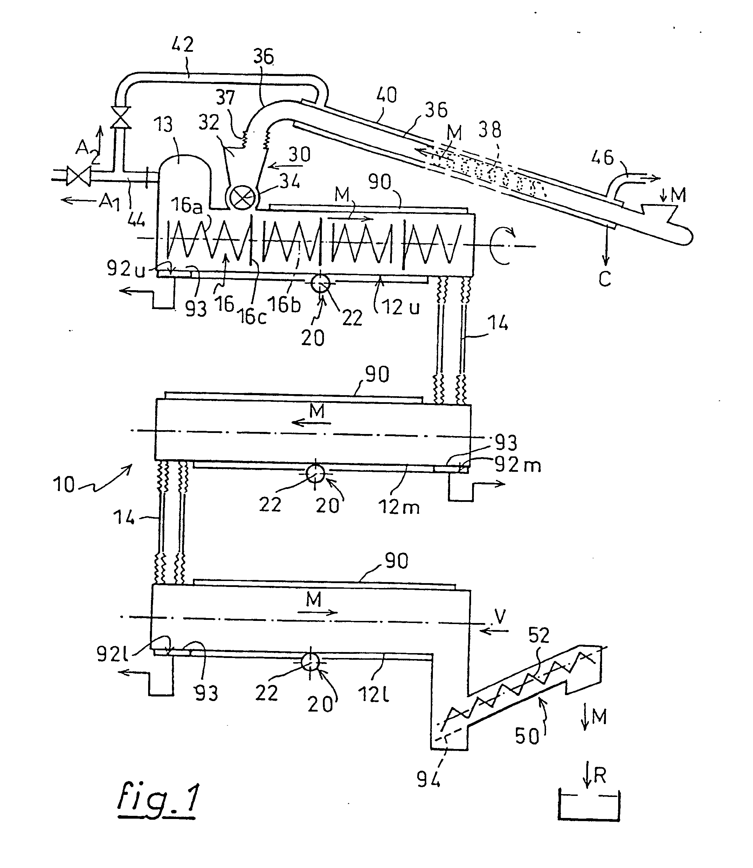

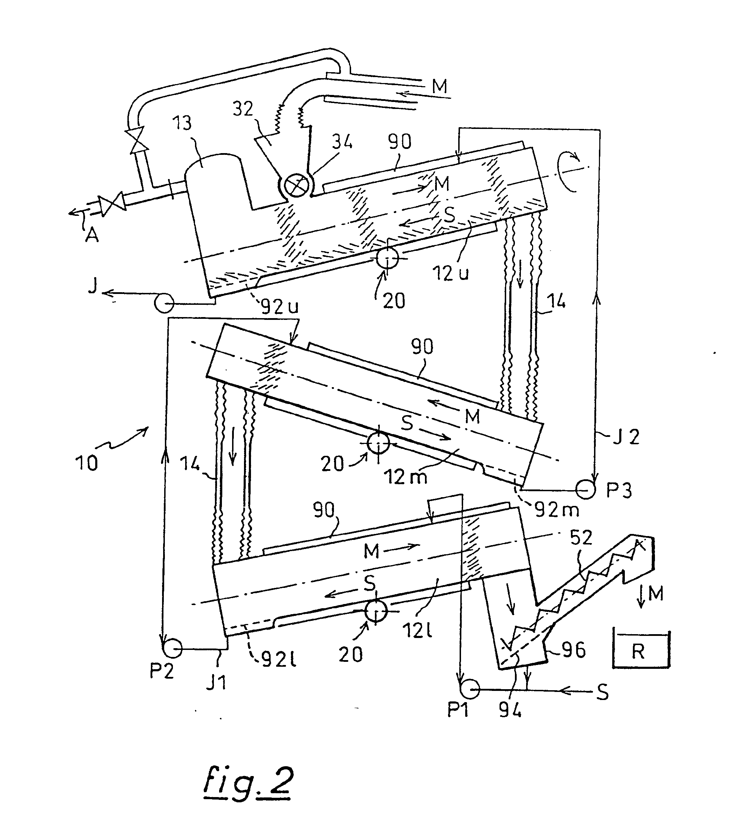

En référence principalement aux figures 1 et 2, un appareil de traitement selon l'invention est représenté par le numéro de référence général 10. Cet appareil de traitement 10 de matières premières végétales représentées par le numéro de référence général M, comprend plusieurs dispositifs de traitement 12 repérés respectivement 12u pour le dispositif de traitement supérieur, 12m pour le dispositif de traitement intermédiaire au moyen, et 12l pour les dispositifs de traitement inférieurs. On peut observer que les dispositifs de traitement 12u, 12m, 12l sont reliés les uns aux autres par des moyens de liaison permanente 14, permettant le transfert de la matière première végétale. Les dispositifs de traitement 12u, 12m, 12l sont disposés à des hauteurs différentes, de sorte que le transfert de la matière première est réalisé par gravité d'un dispositif de traitement à l'autre.

A l'intérieur des dispositifs de traitement 12u, 12m, 12l sont prévus des moyens de transport référencés 16, qui sont avantageusement du type décrit par Berti dans FR-A-1 457 480 et alternant des parties de vis hélicoïdale 16a avec des parties sans vis, séparées par des palettes transversales telles que 16c, montées sur un arbre tournant 16b.

Des moyens de circulation de fluide, symbolisés par la flèche V ou S, sont également prévus pour faire circuler un fluide à l'intérieur des dispositifs de traitement 12u, 12m et 12l, par exemple de la vapeur V (figure 1) ou un solvant S (figure 2).

Selon la présente invention, cet appareil de traitement 10 est caractérisé en ce qu'il comprend des moyens 20 d'inclinaison d'au moins certains des dispositifs de traitement 12u, 12m, 12l.

Selon un mode de réalisation avantageux, ces moyens d'inclinaison 20 comprennent un axe 22 support du dispositif de traitement et permettant d'en assurer l'inclinaison. De tels axes supports sont bien connus à l'homme de l'art et de nombreuses variantes de réalisation existent dans le commerce. Avantageusement, ces moyens d'inclinaison 20 permettent de réaliser une inclinaison variable, à volonté. De préférence, ces moyens d'inclinaison 20 permettent de réaliser une inclinaison comprise entre quelques degrés et environ 45°, de préférence entre environ 5° et environ 45°.

Ces moyens d'inclinaison permettent encore avantageusement de réaliser une inclinaison inverse relativement au sens de circulation de la matière première végétale, comme cela est le cas à la figure 2, dans une fonction extraction de l'appareil de traitement. Il à noter que cette fonction d'extraction peut être indépendante de la fonction distillation, ou combinée avec elle, en fonction de la nature et/ou des conditions d'utilisation du fluide de traitement.

Selon une autre caractéristique avantageuse de l'invention, les moyens de liaison précités 14 sont de longueur variable pour permettre des distances variables entre les dispositifs de traitement, comme cela est clairement compréhensible à partir de la considération des figures 1 et 2. Il peut s'agir de conduits de transfert à soufflet, comme représenté, ou télescopiques, de tels moyens de liaison étant bien connus à l'homme de l'art.

Selon une autre caractéristique avantageuse de l'invention, l'appareil de traitement selon l'invention comprend un système d'alimentation 30 étanche de la matière première végétale, à l'entrée du premier dispositif de traitement 12q.

Dans le mode de réalisation représenté aux figures 1 et 2, ce système d'alimentation 30 comprend une trémie 32 à écluse rotative 34, la trémie 32 étant fermée à sa partie supérieure et communiquant par un soufflet 37 de variation de pente avec une conduite 36 d'alimentation en matière première végétale M inclinée vers le bas, équipée d'un moyen de transport tel qu'une vis 38. Cette conduite 36 peut être équipée d'une double enveloppe permettant de recevoir par une conduite particulière 42 au moins une partie du fluide de traitement sortant du dispositif de traitement supérieur 12u par une conduite 44, en vue d'effectuer un échange thermique avec la matière première végétale afin principalement de la préchauffer, en étant évacuée ensuite par une sortie 46. Le système d'alimentation est par exemple du type Redler, à disques ou à spirale.

A la partie inférieure de l'appareil, le dispositif de traitement inférieur 12l est équipé également d'un dispositif d'évacuation 50 par exemple à vis 52, permettant d'évacuer la matière première traitée M vers un lieu de récupération R.

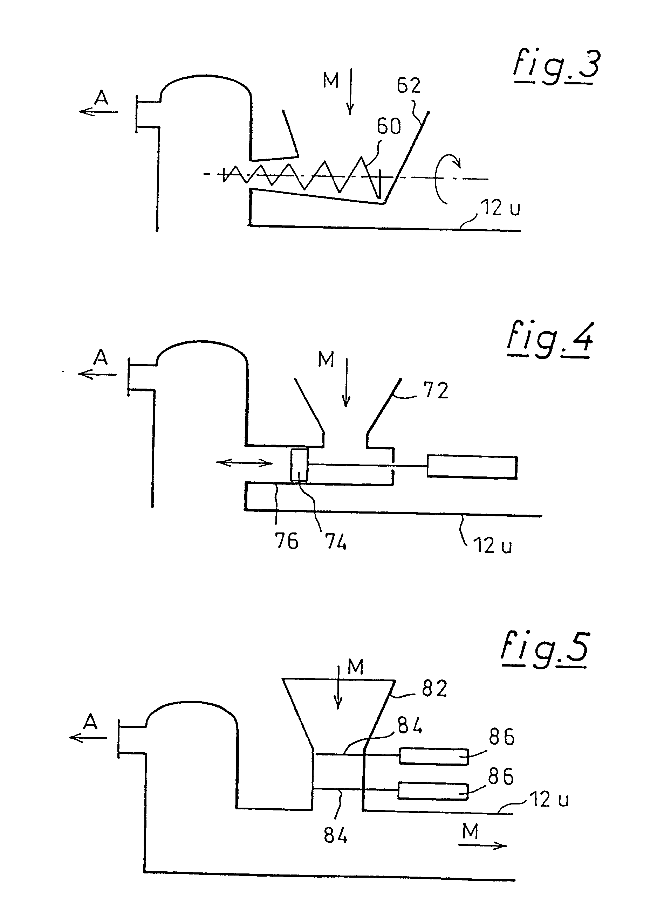

Le dispositif d'alimentation 30, dans la variante de réalisation de la figure 3, peut comprendre une vis légèrement conique 60 dont la partie la plus étroite pénètre à la partie supérieure du dispositif de traitement supérieur 12u pour réaliser un effet de compression de la matière première arrivant dans la trémie 62. Cette trémie 62 peut être ouverte ou fermée comme représenté à la figure 1.

En référence à la figure 4, une autre variante de réalisation d'un dispositif d'alimentation 30 comprend la trémie 72, équipée d'un ensemble piston 74 et cylindre 76 à mouvement alternatif ou à tiroir.

Dans la variante de réalisation de la figure 5, la trémie 82 est équipée d'un système de sas 84 à commande mécanique 86, afin d'assurer l'étanchéité de l'alimentation de matière première vététale.

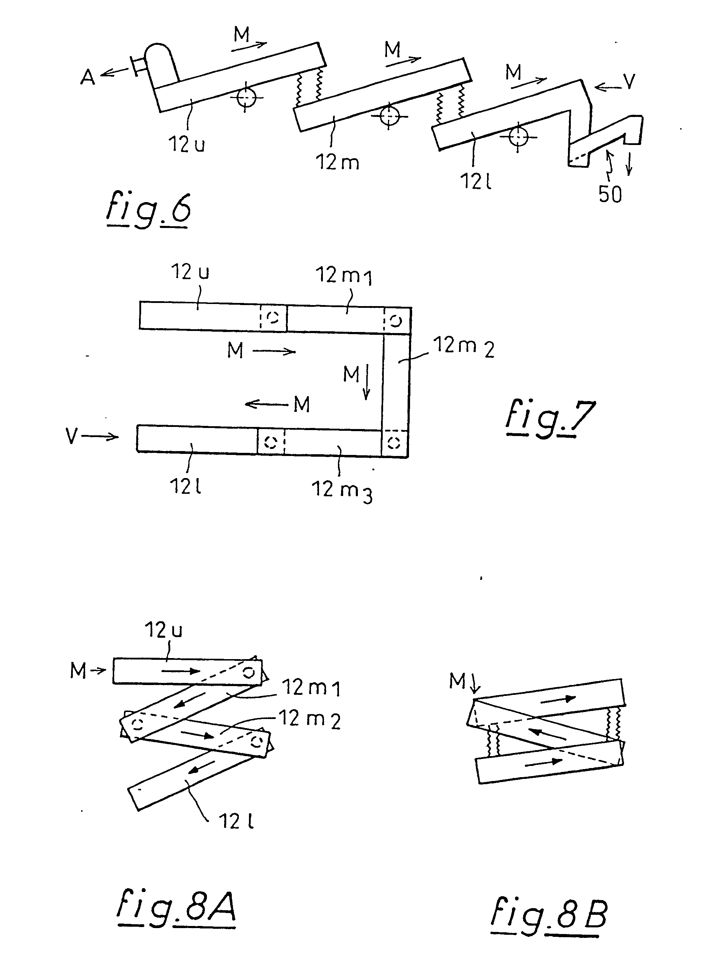

Les figures 6 à 8 représentent divers exemples d'implantation de plusieurs dispositifs de traitement de l'appareil de traitement selon l'invention. A la figure 6, cette implantation est réalisée en ligne, les dispositifs de traitement 12u, 12m, 12l étant disposés de manière décalée pour permettre un positionnement à l'horizontale des dispositifs de traitement dans la fonction distillation. A la figure 7, l'implantation est réalisée en équerre. Ici, il a été représenté trois dispositifs de traitement intermédiaires 12m1, 12m2, 12m3 dont on voit que l'entrée est située en dessous de la sortie du dispositif de traitement immédiatement supérieure. Enfin, aux figures 8A et 8B, on a représenté une implantation en zigzag, c'est-à-dire que les dispositifs de traitement sont décalés et non parallèles.

On conçoit ainsi que l'invention permet de réaliser un appareil de traitement d'une grande versatilité, permettant le traitement de nombreuses matières premières, notamment des matières premières végétales, et en des quantités très différentes, que ce soit dans une fonction extraction ou dans une fonction distillation.

Le procédé de traitement va être maintenant plus particulièrement décrit en référence respectivement à la figure 1 pour la fonction distillation et à la figure 2 pour la fonction extraction, ainsi que dans une variante de réalisation dans un cas de fonctionnement simultané en distillation-extraction.

## I - Fonction en distillation (figure 1)

La matière première végétale M préalablement hachée est alimentée par le convoyeur ou élévateur 36, 38 vers la trémie doseuse 32, 34.

Le convoyeur 36, 38 est de construction fermée, de sorte que la matière première M à distiller est préchauffée à la fois sans perte de constituants volatils et avec récupération d'énergie gratuite.

Ce préchauffage peut être assuré de deux manières :

– soit par contact direct avec des vapeurs aromatiques s'échappant par le dispositif d'introduction 34. Le cas peut se produire avec des matières trop sèches pour bien former un bouchon à l'alimentation. Par la liaison étanche entre la trémie 32 et le convoyeur 38, ces vapeurs vont remonter à contre-courant l'influx de matière première froide et se condenser sur celle-ci, en élevant sa température ainsi que son humidité,

– soit par contact avec la conduite 36 ou gaine du convoyeur 38, laquelle comporte une double enveloppe 40 de chauffage. Dans cette jaquette, on fait entrer tout ou partie des vapeurs aromatiques (A) sortant du dôme 13 du dispositif de traitement supérieur 12u formant ici distillateur. Si la vapeur ainsi dirigée est en excès par rapport à la capacité d'échange thermique du convoyeur 38, les vapeurs non condensées en A3 sont envoyées sur un condenseur-réfrigérant final (non représenté).

Seule une partie des condensats est recueillie en C, pour être dirigée sur un dispositif de séparation classique huile/eau.

La distillation proprement dite est réalisée comme suit :

la matière première M hachée et préchauffée est transportée dans le tube supérieure 12u sensiblement horizontal. Grâce à la disposition particulière des pales 16c calées sur l'arbre tournant 16b, la matière première M s'accumule à intervalles réguliers sur toute la section du tube 12u. La vapeur V la traverse à contre-courant, avant d'atteindre le dôme 13 d'où elle sort de l'appareil saturée en principes volatils.

A l'extrémité du tube supérieur 12u, la matière première M en cours de distillation tombe par gravité via les moyens de liaison 14 vers le dispositif de traitement immédiatement inférieur 12m, jusqu'à aboutir au dispositif de traitement inférieur 12l, d'où la matière première M épuisée est évacuée grâce aux moyens d'évacuation 52, tels qu'une vis.

Les dispositifs de traitement 12u, 12m, 12l peuvent être avantageusement entourés par une enveloppe isolante 90 afin d'éviter la formation de condensation parasite pendant l'opération de distillation.

Dans certains cas, certaines matières premières M peuvent perdre de l'eau par exsudation, ou compression. Cette eau, de même qu'un excès de condensats, peut être extraite à l'extrémité amont de chaque dispositif de traitement 12u, 12m, 12l grâce à un faux fond référencé 92u, 92m, 92l, comportant au moins une grille 93 dégagée en permanence par le passage de pales racleuses qui peuvent être calées sur l'arbre tournant 16b.

Il est à noter qu'avantageusement le dispositif d'extraction à la sortie 52 forme un bouchon d'étanchéité, par exemple par une vis d'Archimède dans un conduit cylindrique 50. Cette vis exerce un effet de compression pour former le bouchon s'opposant à la fuite de la vapeur V, qui est introduite juste au-dessus, comme clairement visible à la figure 1. Par suite, de l'eau se trouve exprimée et doit donc être extraite au travers d'une grille particulière telle que 94.

La vapeur utilisée est en général de la vapeur d'eau, ce qui est bien connu à l'homme de l'art.

## II - Fonction en extraction (figure 2)

En fonction extraction représentée à la figure 2, les dispositifs de traitement 12u, 12m, 12l sont disposés inclinés à l'aide des moyens d'inclinaison 20. L'inclinaison est réalisée de manière inverse par rapport au sens de circulation de la matière première M, de sorte que le transfert de celle-ci soit toujours ascendant, comme on le voit bien à la figure 2.

Il en résulte que les moyens de liaison 14 doivent pouvoir supporter une extension de longueur par rapport à la disposition de la figure 1. Des soufflets flexibles et extensibles des tubes coulissants avec joints sont disponibles dans le commerce.

L'alimentation en continue de la matière première végétale M se fait comme décrit à la figure 1.

Un solvant d'extraction est introduit en S à l'aide d'une pompe P1 vers l'arrière du dispositif de traitement inférieur 12l. Il inhibe la matière première dans une zone de transfert où les pales de l'arbre tournant assurent un bon contact solide/liquide par effet de brasage. Quand la matière arrive dans la zone inférieure où elle subit un tassement, une partie du solvant est exprimée et est récupérée par le dispositif 92u, 92m, 92l, en raison de la pente des dispositifs 12u, 12m, 12l pour être renvoyée soit dans les autres dispositifs de traitement par les moyens de pompage tels que P2, P3 ou être récupérée en J pour subir des traitements complémentaires.

Les paramètres de réglage de l'extraction résultent de l'angle de pente des dispositifs de traitement 12u, 12m, 12l, du débit de solvant, et de la vitesse d'avancement de la matière première solide.

On arrive ainsi à extraire au point bas du dispositif de traitement inférieur 12l un premier jus J1 appelé miscella pauvre que l'on reprend par la pompe P2 pour le remonter vers un dispositif de traitement intermédiaire 12m en assurant ainsi un parfait contre-courant entre la matière première M et le solvant liquide S. On procède de même à chaque étage de dispositif de traitement jusqu'au point de séparation où l'on extrait le jus final J (miscella riche).

On peut également jouer lors de l'extraction sur la température. De ce fait, les dispositifs de traitement 12u, 12m, 12l sont entourés de jaquettes chauffantes 90 grâce auxquelles on peut approcher la température d'ébullition du solvant si cela est désiré, car les vapeurs éventuelles sortant en A peuvent être condensées sur le condenseur prévu pour la distillation et peuvent donc être recyclées.

Au cas où des vapeurs de solvant S auraient tendance à traverser le dispositif d'étanchéité prévu dans le cadre du dispositif d'alimentation 30, elles iraient se condenser au contact des matières premières froides introduites par le dispositif convoyeur 38.

Une sécurité complémentaire est assurée par circulation d'un fluide réfrigérant dans la double enveloppe 40 du convoyeur 38.

La matière solide épuisée est extraite par la vis 52 qui exerce un effet de pressurage et libère le solvant en excès. Celui-ci retombe dans le dispositif de séparation 94-96. La fraction de solvant peut être réintroduite dans l'appareil avec le solvant vierge S.

Le principe modulaire de l'appareil selon l'invention permet l'installation d'un nombre d'étages d'extraction aussi élevé que nécessaire en fonction du tonnage de matière première à traiter à l'heure. Cependant, pour limiter la hauteur totale de l'ensemble, des configurations différentes peuvent être adoptées, comme le montrent les exemples d'implantation des figures 6 à 8. Dans tous les cas, les solides doivent passer par simple chute gravitaire d'un dispositif de traitement au suivant, tandis que les miscellas sont remontés par pompage. Ces divers circuits sont tous pourvus de débitmètres pour le contrôle du fonctionnement de l'extraction à contre-courant.

### III - Fonction distillation et extraction simultanées

Dans le cas de fonctionnement en contre-courant matière/vapeur d'eau, il est nécessaire de limiter la formation de condensats pour une distillation par entraînement.

Mais si au contraire on facilite ces condensations, par exemple en faisant circuler un fluide froid dans les doubles enveloppes 90, on procède alors à une extraction à la vapeur sur les matières premières solides, par exemple café, thé, infusions.

Simultanément, on régule cet effet de condensation pour qu'une quantité déterminée de vapeur A sorte par le dôme 13. Cette vapeur A est porteuse des composants aromatiques volatils qui sont ainsi récupérés par condensation.

Quant à l'extrait fixe soluble à l'eau, il est séparé au point bas de chaque dispositif de traitement (par le dispositif 92u, 92m, 92l).

Pour réaliser cette double fonction, l'inclinaison des dispositifs de traitement par rapport à l'horizontale doit être déterminée, par expérience, selon un angle intermédiaire entre le cas de la distillation seule (horizontale) et le cas de l'extraction seule (inclinaison maximale).

Selon une variante de réalisation avantageuse, il est possible de donner un angle d'inclinaison différent à chaque dispositif de traitement en fonction de sa position dans le circuit d'acheminement de la matière première M.

Dans le cadre d'une installation comportant tous les dispositifs de traitement 12u, 12m et 12l, comme décrit et représenté aux figures 1 et 2, on peut traiter 1 000 kg/h de menthe fraîchement récoltée, coupée en vert en longueurs n'excédant pas 5 cm, par la trémie 32. Ce végétal renferme plus de 80 % d'eau.

A l'autre extrémité du circuit sont injectés en V 300 kg/h de vapeur d'eau détendue à 0,1 bar.

On recueille par heure en A 180 l/h de condensats aqueux donnant par décantation 4 kg d'huile essentielle de menthe ;

– 120 l/h de jus de J de menthe à 10 % de matière sèche soluble.

Quant au marc de végétal épuisé, il ressort avec un taux d'humidité à peu près égal au taux mesuré à l'entrée.

On comprend ainsi que l'invention permet d'aboutir à tous les avantages techniques précédemment décrits.

### Revendications

1. Appareil (10) de traitement de matières premières avantageusement végétales (M), notamment aromatiques, médicinales, alimentaires ou résiduaires, comprenant plusieurs dispositifs de traitement (12u, 12m, 12l) reliés les uns aux autres par des moyens de liaison (14) permettant le transfert de la matière première (M), et disposés à des hauteurs différentes, en définissant respectivement un dispositif de traitement de niveau supérieur (12q) recevant la matière première végétale à traiter et un dispositif de traitement de niveau inférieur (12l) évacuant cette matière première végétale après traitement, des moyens de traitement étant prévus dans lesdits dispositifs, comprenant des moyens de transport (tels que 16) de la matière première à l'intérieur des dispositifs de traitement, et des moyens (V ou S) pour faire circuler un fluide de traitement avantageusement à contre-courant, caractérisé en ce qu'il comprend des moyens (20) d'inclinaison d'au moins certains des dispositifs de traitement (12u, 12m, 12l), de préférence comprenant des axes (22) supports des dispositifs de traitement (12u, 12m, 12l).

2. Appareil selon la revendication 1, caractérisé en ce que les moyens d'inclinaison (20) réalisent une inclinaison inverse relativement au sens de circulation de la matière première (M).

3. Appareil selon la revendication 1 ou 2, caractérisé en ce que les moyens d'inclinaison (20) réalisent une inclinaison comprise entre quelques degrés et environ 45°, de préférence entre environ 5° et environ 45°.

4. Appareil selon l'une des revendications 1 à 3, caractérisé en ce que les dispositifs de traitement précités (12u, 12m, 12l) sont équipés de moyens de transport (16) de la matière première, comprenant des éléments de propulsion (16a) alternés avec des éléments d'arrêt ou de blocage (16c) de l'avance de la matière première (M).

5. Appareil selon la revendication 4, caractérisé en ce que les moyens de transport (16) sont à vis (16a), dont la continuité est rompue par des palettes radiales (16c), formant des tampons temporaires de matière première (M).

6. Appareil selon l'une des revendications 1 à 5, caractérisé en ce qu'il comprend un système d'alimentation (30) étanche de la matière végétale à l'entrée du premier dispositif de traitement (12u), et avantageusement également à la sortie du dispositif de traitement inférieur (12l).

7. Appareil selon l'une des revendications 1 à 6, caractérisé en ce que les moyens de liaison précités (14) sont de longueur variable pour permettre des distances variables entre les dispositifs de traitement adjacents.

8. Appareil selon l'une des revendications 1 à 7, caractérisé en ce que les dispositifs de traitement (12u, 12m, 12l) sont disposés soit en ligne (figure 6), soit en équerre (figure 7), soit en zigzag (figures 8A, 8B).

9. Appareil de traitement selon l'une des revendications 1 à 8, caractérisé en ce que chaque dispositif de traitement (12u, 12m, 12l) est équipé d'un faux fond (92) comportant une grille (93).

10. Appareil de traitement selon l'une des revendications 1 à 9, caractérisé en ce qu'il fonctionne en distillateur, ou en extracteur, ou simultanément en distillateur-extracteur.

_fig. 1_

*fig.2*

_fig.3_

_fig.4_

_fig.5_

*fig.6*

*fig.7*

*fig.8A*

*fig.8B*

Office européen
des brevets

**RAPPORT DE RECHERCHE EUROPEENNE**

Numero de la demande

EP 91 40 0765

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A- 500 072 (M.P.P. GLOESS) * Pages 1-3 * | 1 | B 01 D 11/02 |
| A | | 4,5,8-10 | |
| Y | US-A-2 921 063 (STICHTING INSTITUUT VOOR MECHANISATIE, ARBEID EN GEBOUWEN) * Pages 1-7 * | 1 | |
| A | DE-A-2 921 063 | 2,3,9 | |
| Y | FR-A-2 462 181 (J.-C. MAU) * Page 3, lignes 34-36; page 6 * | 1 | |
| Y | DE-A-3 315 038 (STAHL WERNER) * Page 10, lignes 15-17; page 13, lignes 22-23; page 17, lignes 10-12; pages 1-6 * | 1 | |
| Y | FR-A-2 261 065 (W. ROHR) * Page 3, lignes 13-31; page 6 * | 1 | **DOMAINES TECHNIQUES RECHERCHES (Int. Cl.5)** |
| A | US-A-2 587 556 (WEIS) * @Figure 1 * | 1-10 | B 01 D |
| A | DE-C- 713 963 (A. PFÄNDER) * Pages 1-3 * | 1-10 | |

Le présent rapport a été établi pour toutes les revendications

| Lieu de la recherche | Date d'achèvement de la recherche | Examinateur |
|---|---|---|
| LA HAYE | 10-06-1991 | DE PAEPE P.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)